# EUROPÄISCHE PATENTSCHRIFT

(11) **EP 1 099 832 B1**
(45) Veröffentlichungstag und Bekanntmachung des Hinweises auf die Patenterteilung: **14.04.2004**
(21) Anmeldenummer: 00116986.1
(22) Anmeldetag: 08.08.2000
(51) Int. Cl.: F01N 3/22, F16K 15/16, F16K 31/126

(54) **Stellelement**
Control element
Elément de réglage

(30) Priorität: 12.11.1999 DE 19954472
(43) Veröffentlichungstag der Anmeldung: 16.05.2001
(73) Patentinhaber: Pierburg GmbH, 41460 Neuss (DE)
(72) Erfinder: Burgfels, Peter, 41363 Jüchen (DE)
(74) Vertreter: Ter Smitten, Hans

(56) Entgegenhaltungen:
- DE-A- 19 702 917
- GB-A- 2 251 918

## Beschreibung

Die Erfindung betrifft ein Stellelement mit einer Membrane nach dem Oberbegriff des Patentanspruchs 1.

Ein derartiges Stellelement findet zum Beispiel Verwendung für ein Kombiventil für Sekundärluftgebläse in Brennkraftmaschinen (DE 43 07 798 A1). Dort ist vorgesehen, daß der am Ventileinlaß herrschende Druck die Öffnung des Ventils unterstützt.
Hierzu ist es notwendig, daß der am Ventileinlaß herrschende Druck über einen Gehäuse- und einen Deckelflansch in eine Steuerdruckkammer geführt wird.

Da die zwischen den Gehäuse- und Deckelflanschen eingespannte Membrane eine Durchlaßöffnung aufweisen muß, läßt sich ihre Montage nur mit einer genauen Ausrichtung der Durchlaßöffnung in bezug auf die Gehäuse- und Deckelkanäle erreichen, womit eine vollautomatische Fertigung in Frage steht.

Hiervon ausgehend liegt der Erfindung die Aufgabe zugrunde, Maßnahmen aufzufinden, mit denen sich ein gattungsgemäßes Stellelement ohne eine genaue Ausrichtung der Membrane fertigen läßt.

Diese Aufgabe ist mit den im Kennzeichen des Patentanspruchs 1 angegebenen Merkmale gelöst worden. Vorteilhafte Weiterbildungen sind mit den Unteransprüchen angegeben.

Ein Ausführungsbeispiel der Erfindung ist in der Zeichnung dargestellt und wird nachfolgend beschrieben.

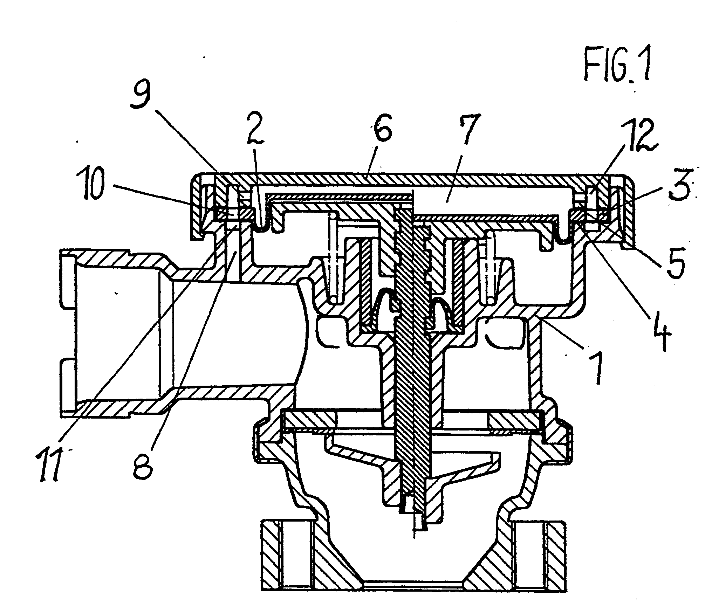

Diese zeigt:
**Fig. 1**
   einen Schnitt durch ein Stellelement eines Schaltventils;
**Fig. 2**
   eine alternative Ausführung des Stellelements nach Fig. 1.

Die Fig. 1 zeigt einen Schnitt eines Stellelements 1 mit einer Membrane 2, deren äußerer Rand 3 zwischen einem Gehäuse- und einem Deckelflansch 4 und 5 eingespannt ist und die eine im Deckel 6 bestehende Steuerdruckkammer 7 begrenzt, deren Steuerdruckbeaufschlagung über einen Gehäuse- und einen Deckelkanal 8 und 9 sowie eine beide Kanäle 8 und 9 verbindende Membranrandausnehmung 10 erfolgt.

Dieses Stellelement 1 eignet sich zum Beispiel für ein Schaltventil in der Zuführleitung für sogenannte Sekundärluft einer Brennkraftmaschine, die von einer Luftpumpe bereitgestellt und in den Auspuff gefördert wird.

Der beim Pumpenanlauf entstehende Druck am Ventileinlaß wird über die Gehäuse- und Dekkelkanäle 8 und 9 in die Steuerdruckkammer 7 geführt, wodurch das Ventil öffnet.

Erfindungsgemäß ist nun vorgesehen, daß zwischen dem Gehäusekanal 8 und der Membranrandausnehmung 10 und dieser und dem Deckelkanal 9 umlaufende Nutausnehmungen 11, 12 angeordnet sind. Die Membranrandausnehmung 10 gelangt in jeder Drehstellung der Membrane 2 mit den Nutausnehmungen 11, 12 in Überdeckung, womit eine stellungsunabhängige Montage der Membrane 2 und auch des Deckels 6 gegeben ist.

Es ist vorteilhaft, wenn die Nutausnehmungen 11, 12 in dem Gehäuseflansch 4 und dem Dekkelflansch 5 angeordnet sind.

Es ist jedoch auch möglich, daß die Nutausnehmungen 11, 12 beiderseits des Membranrandes 3 angeordnet sind, wobei dann eine Membraneinlage zum Beispiel aus Metall vorzusehen wäre.

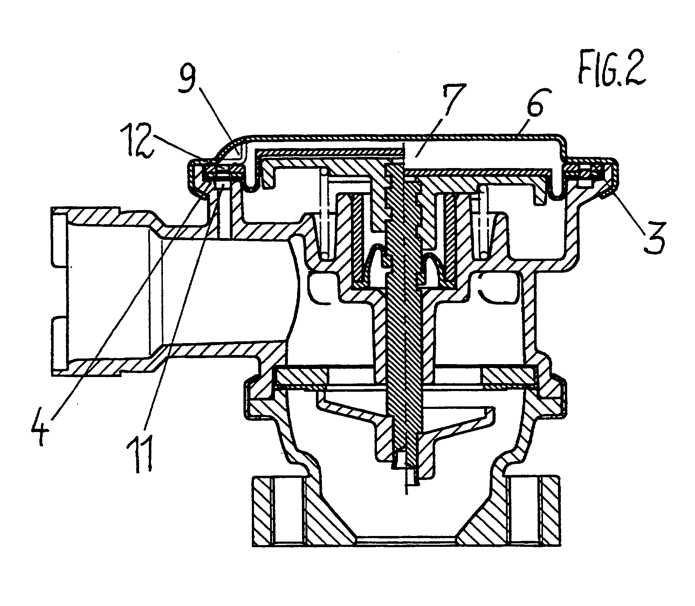

Alternativ zu diesen beiden Ausführungen kann vorgesehen werden, wie Fig. 2 zeigt, die Nutausnehmungen 11, 12 in dem Gehäuseflansch 4 und in der dem Deckel 6 zugewandten Seite des Membranrandes 3 anzuordnen.

Wie in Fig. 2 dargestellt ist, kann der Deckel 6 einen Deckelkanal 9 aufweisen, der in Tiefziehtechnik in den Deckelflansch 5 eingeformt ist.

Es versteht sich von selbst, daß das erfindungsgemäße Stellelement 1 auch für andere Stellaufgaben eingesetzt werden kann, ohne den Erfindungsbereich zu verlassen.

## Patentansprüche

1. Stellelement mit einer Membrane, deren äußerer Rand zwischen einem Gehäuse- und einem Deckelflansch eingespannt ist und die eine im Deckel bestehende Steuerdruckkammer begrenzt, deren Steuerdruckbeaufschlagung über einen Gehäuse- und einen Deckelkanal sowie eine beide Kanäle verbindende Membranrandausnehmung erfolgt, **dadurch gekennzeichnet, daß** zwischen dem Gehäusekanal (8) und der Membranrandausnehmung (10) und dieser und dem Deckelkanal (9) umlaufende Nutausnehmungen (11, 12) angeordnet sind.

2. Stellelement nach Anspruch 1, **dadurch gekennzeichnet, daß** die Nutausnehmungen (11, 12) in dem Gehäuseflansch (4) und dem Deckelflansch (5) angeordnet sind.

3. Stellelement nach Anspruch 1, **dadurch gekennzeichnet, daß** die Nutausnehmungen (11, 12) beiderseits des Membranrandes (3) angeordnet sind.

4. Stellelement nach Anspruch 1, **dadurch gekennzeichnet, daß** die Nutausnehmungen (11, 12) in dem Gehäuseflansch (4) und in der dem Deckel (6) zugewandten Seite des Membranrandes (3) angeordnet sind.

5. Stellelement nach Anspruch 4, **dadurch gekennzeichnet, daß** der Deckel (6) einen Deckelkanal (9) aufweist, der in Tiefziehtechnik in den Deckelflansch (5) eingeformt ist.

## Claims

1. Control element with a diaphragm, the outer edge of which is gripped between a housing and a cap flange and which bounds a control pressure chamber which is located in the cap and to which control pressure is admitted via a housing and a cap port as well as a diaphragm edge recess which connects the two ports, **characterised in that** circumferential groove-like recesses (11, 12) are disposed between the housing port (8) and the diaphragm edge recess (10) and between the latter and the cap port (9).

2. Control element according to Claim 1, **characterised in that** the groove-like recesses (11, 12) are disposed in the housing flange (4) and the cap flange (5).

3. Control element according to Claim 1, **characterised in that** the groove-like recesses (11, 12) are disposed on both sides of the diaphragm edge (3).

4. Control element according to Claim 1, **characterised in that** the groove-like recesses (11, 12) are disposed in the housing flange (4) and in the side of the diaphragm edge (3) facing the cap (6).

5. Control element according to Claim 4, **characterised in that** the cap (6) has a cap port (9), which is moulded into the cap flange (5) by deep drawing.

## Revendications

1. Elément de réglage comprenant une membrane, dont le bord extérieur est serré entre une bride de cage et une bride de chapeau et qui délimite une chambre de pression pilote dans le chapeau, dont l'alimentation en pression pilote est assurée par l'intermédiaire d'un canal de cage et d'un canal de chapeau, ainsi que par l'intermédiaire d'un creux de bord de membrane reliant les deux canaux, **caractérisé en ce que** des creux rainurés périphériques (11, 12) sont disposés entre le canal de cage (8) et le creux de bord de membrane (10), et entre ce dernier et le canal de chapeau (9).

2. Elément de réglage suivant la revendication 1, **caractérisé en ce que** les creux rainurés (11, 12) sont disposés dans la bride de cage (4) et dans la bride de chapeau (5).

3. Elément de réglage suivant la revendication 1, **caractérisé en ce que** les creux rainurés (11, 12) sont disposés de part et d'autre du bord de membrane (3).

4. Elément de réglage suivant la revendication 1, **caractérisé en ce que** les creux rainurés (11, 12) sont disposés dans la bride de cage (4) et dans le côté du bord de membrane (3) tourné vers le chapeau (6).

5. Elément de réglage suivant la revendication 4, **caractérisé en ce que** le chapeau (6) présente un canal (9), conformé dans la bride de chapeau (5) dans la technique d'emboutissage profond.
